# EUROPEAN PATENT APPLICATION

(11) **EP 3 316 188 A1**
(43) Date of publication of application: **02.05.2018**
(21) Application number: 17198190.5
(22) Date of filing: 25.10.2017
(51) Int. Cl.: G06Q 10/00

(54) **DECISION MAKING METHOD AND SYSTEM FOR PROVIDING SERVICE RECOMMENDATION SYSTEM**

(30) Priority: 28.10.2016 US 201662414562 P
(71) Applicant: Thomson Licensing LLC, Princeton, NJ 08540 (US)
(72) Inventor: SIVALINGAM, Dayan, Princeton, NJ New Jersey 08540 (US); RAMALINGAM, Satheesh, Princeton, NJ New Jersey 08540 (US); RAI, Sapna, Princeton, NJ New Jersey 08540 (US); HEREDIA, Edwin, Princeton, NJ New Jersey 08540 (US)
(74) Representative: Huchet, Anne

(57) **Abstract**

A system and methods for generating recommendation about use of a vehicle is provided. In one embodiment, the method comprises creating a user profile for at least one vehicle and creating a user profile for a driver of the one vehicle. The method also comprises generating data regarding condition of a plurality of components of the vehicle and generating maintenance and user alerts based on information from the user and vehicle profiles and the component conditions.

## Description

### TECHNICAL FIELD

The present disclosure relates generally to data management and more particularly to techniques utilizing data management to provide recommendation relating to use and maintenance of vehicles.

### BACKGROUND

This section is intended to introduce the reader to various aspects of art, which may be related to various aspects of the present invention that are described and/or claimed below. This discussion is believed to be helpful in providing the reader with background information to facilitate a better understanding. Accordingly, it should be understood that these statements are to be read in this light, and not as admissions of prior art.

There is an emerging trend to automate many of the components of navigational vehicles such as cars and boats. For decades, computers have been incorporated in vehicles to increase reliability. Many of the manual and mechanical components of these vehicles have been replaced by electronic counterparts. This allows for many of the controls to become fewer and simpler through automation. For example, an electric starter has replaced a clank, and pedals that were physically linked to such systems as the braking mechanism and throttle are also being increasingly replaced by electronic controls.

Recently, more and more of the vehicle's function and safety operation is being automated sometimes by use of an on-board diagnostic (OBD) system or component. Early versions of OBD were simple in that they would only alert a user of a malfunction simply by a light indicator. While the current versions are more sophisticated, they are still limited in providing recommendations prior to a malfunction. OBD's are also tied in to a particular vehicle and therefore alerts are only provided when a user is only using that particular vehicle.

Growth of technology, however, has provided instant and cheap access to processors. This allows the potential of using these devices to improve the safety and reliability of vehicles in a manner that does not need to be dependent solely on OBDs. Consequently, it is desirous to have improvements in the area of vehicle management that can take full advantage of processor availability.

### SUMMARY

A system and methods for generating recommendation about use of a vehicle is provided. In one embodiment, the method comprises creating a user profile for at least one vehicle and creating a user profile for a driver of the one vehicle. The method also comprises generating data regarding condition of a plurality of components of the vehicle and generating maintenance and user alerts based on information from the user and vehicle profiles and the component conditions.

In an alternate embodiment, a method of generating recommendation about a plurality of vehicles is provided. The method comprises creating a user profile about a plurality of vehicles and drivers and establishing security access authentication requirements for accessing information in the user and vehicle profiles. The method also comprises generating data regarding condition of a plurality of components of the vehicles and generating maintenance and user alerts based on information in the user and vehicle profiles and relating to component conditions. The recommendation and user alerts users are then sent to users with authentication security access.

In yet another embodiment a system for generating recommendation about use of a vehicle is provided comprising a processor configured to create a user profile for at least one vehicle. The processor is also configured to creating a user profile for a driver of the vehicle. The system also comprises a plurality of sensors for monitoring condition of a plurality of components of the vehicle and a plurality of databases accessible by the processor, the databases comprising a variety of information regarding vehicle safety, road safety and weather conditions. In addition, a user interface for receiving user request by the processor is also included such that the processor can be configured to generate recommendation based on the user request and alerts for usage of the vehicle based on information in the vehicle and user profiles, the sensors and the information in said data basis.

Additional features and advantages are realized through the techniques of the present disclosure. Other embodiments and aspects of the invention are described in detail herein and are considered a part of the claimed invention. For a better understanding of the invention with advantages and features, refer to the description and to the drawings.

### BRIEF DESCRIPTION OF THE DRAWINGS

The present disclosure will be better understood and illustrated by means of the following embodiment and execution examples, in no way limitative, with reference to the appended figures on which:
Figure 1 is a block diagram depicting an intelligent computer system according to one embodiment;
Figure 2 is a block diagram showing exemplary data management such as can be used by embodiment of Figure 1;
Figure 3 is a flowchart depiction of management of data according to one embodiment;
Figure 4 is block diagram of a computer system such as can be used in conjunction with embodiment of Figures 1 and 3; and
Figure 5 is a block diagram depiction of a depiction of a network and system including a vehicle on-board diagnostic (OBD) device according to one embodiment.

Wherever possible, the same reference numerals will be used throughout the figures to refer to the same or like parts.

### DESCRIPTION

It is to be understood that the figures and descriptions of the present invention have been simplified to illustrate elements that are relevant for a clear understanding of the present invention, while eliminating, for purposes of clarity, many other elements found in typical digital multimedia content delivery methods and systems. However, because such elements are well known in the art, a detailed discussion of such elements is not provided herein. The disclosure herein is directed to all such variations and modification. In addition, various inventive features are described below that can each be used independently of one another or in combination with other features. Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

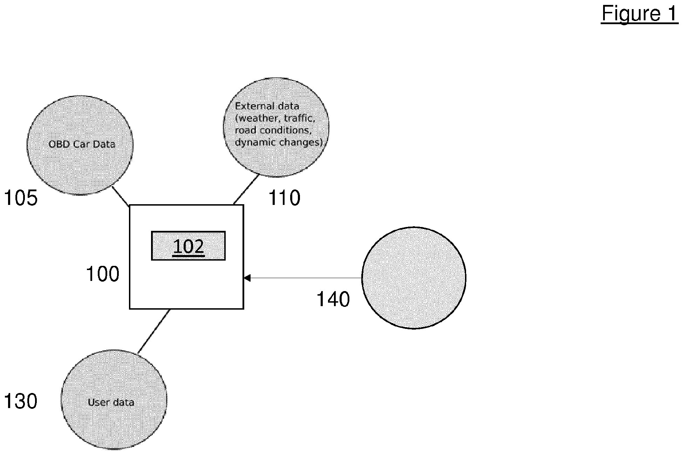

Figure 1 is a block diagram describing an intelligent system 100 according to one embodiment. The intelligent system 100 includes at least one processor 102. The intelligent system 100 can include an on-board diagnosis (OBD) system installed in a car or operated from a computer such as a server or even a mobile device such as a smart phone. In another embodiment, the intelligent system 100 can be include a mobile device such as a smart phone, or other computers such as servers. In one embodiment, a combination of OBD and one or more computers such as a smart phone, tablets, laptops and others that can be included in the intelligent system 100. In addition, the processor 102 may be a single processor or part of a network of processors. Consequently, the processor(s) may be included in a variety of different devices or disposed in different locations. For example, as discussed, the processor 102 can be included in a mobile device such as a smart phone or a laptop or a tablet that is carried by one or more users, drivers, passengers or car owners. In another embodiment, the processor can be part of the OBD or be located in a remote server.

The intelligent system 100, in one embodiment using the processor, can gather information regarding the condition or a particular vehicle or vehicles. In addition, information about one or more users/drivers and their driving history and habits can also be accumulated. In one embodiment the intelligent system 100 can gather information by accessing one or more information gathering database or databases. These databases can be part of the intelligent system 100 (internal sources) or alternatively reside on other devices or computers that are in communication with the intelligent system 100 (external sources). In this way, as discussed, the intelligent system 100 can gather data from a variety of internal or external sources. Intelligent system 100, can have access to a variety of information that will be either accessed immediately and/or that can be accumulated over time. Some examples of such information is provided in the block diagram of Figure 1, with the understanding that this is only provided to aid understanding and not as an exhaustive inclusive list, as can be appreciated by those skilled in the art.

In one embodiment, data can be supplied or gathered through direct user input or otherwise by searching databases available. The databases can reside in devices included in the intelligent system (100) or be externally acquired such as through use of the Internet, global positioning devices (GPS) or other such resources as can be appreciated by those skilled in the art. Information and data gathering efforts can be acquired simultaneously through several sources or be acquired one at a time and accumulated over time. For example, information about the make or model of a vehicle can be provided as an input from system administrator or user of a vehicle, for example at time of purchase. Repair and maintenance data can be then be added by a service provider (such as on a per visit basis) as these services are rendered over time. In Figure 1, this source of data is provided graphically by numerals 140. Other data can be obtained and accumulated dynamically via one or more sensors referenced by numerals 105. Information about a variety of other factors from road conditions to vehicle component recalls can also be obtained from external sources 110. Data from external sources can include weather reports, instantaneous accident and road closures reports, blue books values, component recalls or even more information about vehicle reliability and popularity gathered from popular user blogs. Besides vehicles, driving habits and past driving history including accidents, tickets and other such records can also be gathered about one or more drivers.

One way of accumulating information about drivers /or vehicles is to create and update user profiles. The user profile may relate to a particular user or the vehicle or instead by accumulated and identified by a particular vehicle or a combination of both. The information can be used in a cross-linear fashion such that information about driver D who normally drives Vehicle V can be transferred to a Vehicle W when driver D will decide to use Vehicle W instead of Vehicle V. Similarly, a different driver, Driver C can also be access information about Vehicle V that has been accumulated by the intelligent system 100. However, since some of the information in a user profile may be sensitive, security measures may have to be enacted in one embodiment to ensure information safety. Consequently, in one embodiment, accessing system 100 may be secured through authentication and requiring password entry or entry using a biometric measure. Data may be secured on a per user or even per vehicle basis. In one embodiment, access may be shared by a group of users or provided to a group of vehicles. Some data may be shared by members of a group while some data remains private to a user even when the group is sharing some access through available methods as can be appreciated by those skilled in the art.

In one embodiment, the intelligent system 100 aggregates data and transfers data to a repository. The repository could be a personal database for the user such as on a mobile device like a smart phone or even a cloud-based system. In either case, as per one embodiment, the data can be collected and aggregated from multiple users. In one embodiment, data is collected at during a time period or even during pre-defined time intervals. Data may include all or at least some of the information about the operation of a particular kind and other related car dynamics. It can also include other identifiers for car types, time, driver, and GPS locations as well as other materials. In one embodiment, the data is aggregated in a general-purpose database. If the database hosts data from many (i.e millions) users, the database will use architectures for distributing data across nodes in storage data centers. These architectures will not be discussed here in detail as they are generally known to persons skilled in the art.

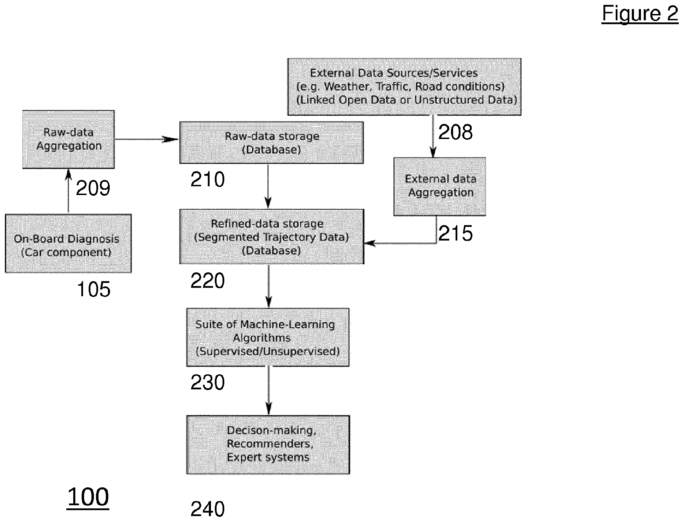

In one embodiment, as shown in Figure 2, the intelligent system 100 collects the raw data from a variety of sources such as OBD 105 and aggregates it as shown at 209. External data 208 can be also provided such as weather and road conditions as shown. It will then store the raw data in a database 210 and aggregates and stores it as "refined data" such as in a database as shown at 220. External data aggregators as will be discussed and shown at 215 can also provide aggregate data to the refined database. The system, in one embodiment aggregates data and transfers data to a repository. In one embodiment, the repository could be a personal database for the user such as on a mobile device like a smart phone or even a cloud-based system. In either case, as per one embodiment, the data can be collected and aggregated from multiple users. In the exemplary embodiment of Figure 2, data is collected at during a time period or even during pre-defined time intervals. Data may include all or at least some of the information about the operation of a particular kind and other related car dynamics. It can also include other identifiers for car types, time, driver, and GPS locations as well as other materials. In one embodiment, the data is aggregated in a general-purpose database. If the database hosts data from many (i.e millions) users, the database will use architectures for distributing data across nodes in storage data centers. These architectures will not be discussed here in detail as they are generally known to persons skilled in the art.

The term refined data here represents highly structured linked data that can be used for machine-learning operations 230. It can additionally, it can be used for decision making 240 as the basis for the personalized experts and recommenders. However, as can be appreciated by those skilled in the art, in alternate embodiments other similar arrangements can be used.

In one embodiment, one or more critical or essential components of the car can also be identified. These components can then be closely monitored in a variety of ways. In one instance, in addition to the prior maintenance history and repair services, one or more sensors can monitor their functioning. In addition, an OBD system when used or a service provider can supply additional information during service visits. Furthermore, external information is also collected from external sources that can range from manufacture documentation and alerts to material included on the Internet, social media or even specialty blogs that deal with ownership of vehicles and manufacturing of components. This information also includes vehicle recall information and other similar literature and alerts. In one embodiment, the data will be highly structured and grouped so as to serve the purpose of capturing historic descriptions of trajectory segments for drivers while driving by the system 100. In this embodiment, refined data can be described as a linked graph because it aggregates data from multiple sources.

This information is then analyzed against other information about the car that has also been collected as raw data in the same manner or manners as discussed above, In one embodiment, this information will include make and model of the car, distance travelled (mileage), top speed and/or average speed, type of weather during which the vehicle is operating and the likes. For example, a vehicle that is operating mostly in a cold climate may have different needs than one being operated in a tropical wet and warm climate or a moderate and dry climate. In addition, extreme weather changes not only impact the components themselves but road conditions and other issues that may have an impact on the proper operation of the vehicle of the components. This type of information is useful information for drivers and vehicle owner to know at any time. However, there are recommendations, warnings and alerts that may be generated by the processor analyzing this information ahead of time. Not only this type of information is useful to know ahead of time for vehicle care and safety of the driver/operator but this information can lead to efficient utilization. In one embodiment, the processor can be further personalized to achieve predictive based outcome predictions based on intrinsic factors such as distance travelled, speed, nature of driving, braking as well as based on extrinsic factors such as road conditions, weather and traffic provided.

In addition, a refined data set can generated and described similarly as data that is descriptive and relational data for a collection of trajectory segments. To aid understanding, for a current example, trajectory is defined as the route a driver takes to go from an initial location to a final location (but it can be defined otherwise in alternate embodiments). The route trajectory in this example can be divided into smaller segments. A segment can represent a certain distance in the trajectory (e.g. 2 miles), or it may represent a certain time interval in the trajectory (e.g. first 10 minutes). The route may be analyzed and recommendation can be provided prior to trip commencement. For example, a change of tires or a particular kind of vipers may be recommended based for a rough environment.

In Figure 2, the system 100 can include an external data aggregation component as well. This works similarly and can designed to add as much relevant information as possible from external sources to each of the trajectory segments available in the refined data set. In one embodiment data linking process can be used. In one embodiment, if the sources come from external sources, such as those organizations that openly publish data, the data is often known as Linked Open Data (LOD) and the system 100 will have the capability to add this data to be used in information aggregation as needed and appropriate. Linked Open Data may also be processed when received in the form of graphs. In one embodiment, it is possible to import a subset of the graphs with application data.

In one embodiment, a suite of machine learning algorithms can be used to identify (and continuously learn) patterns from the data. Other methods are used in alternate embodiments. When machine-learning algorithms are used data that includes both supervised and unsupervised methods of collection can be incorporated. Unsupervised methods can be used, for example, to classify drivers that drive during winter conditions into: 'extremely careful', 'careful', 'average', 'careless', 'extremely careless'. Supervised methods can be used, for example, to predict the impact of traffic congestion and weather conditions on fuel consumption for urban and rural settings. Supervised learning methods can include deep learning algorithms where a neural network is trained to identify patterns like driving habits based on collected car data and environment data.

The machine-learning algorithms can be used for the deployment of classifiers, recommenders, decision engines, and expert systems. These machine-learning algorithms may be able to use data from different but similar drivers (persons) to classify, predict, or find patterns for a single driver. These machine-learning algorithms may be highly dynamic. They may be able to change their outcome (classification, prediction, pattern recognition) based on dynamic changes to the environment. For example, if the system is used to predict energy consumption for a trip from A to B, the system can dynamically compute new estimates in case of sudden nearby accidents.

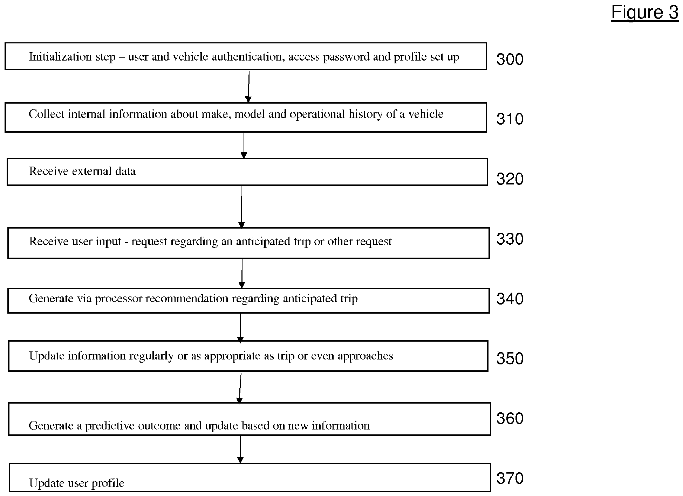

Figure 3 is a flow chart depiction of one embodiment. In step 310, the processor gathers and collects internal information that relate to the condition of the vehicle and/or driver of the vehicle. In one embodiment, the gathered information can be from accessing a profile set up particularly about a particular driver and a particular vehicle. As indicated earlier, security access may be provided before information is accessed or alternatively provided to a particularly user or about a particular vehicle. The user and vehicle information can be set up in different profiles and then cross checked or cross accessed. Similarly, a set of users or a set of vehicles can be clumped together in a user or alternatively security access relating to a set of user/drivers or a set of vehicles may be shared. For example, in a family consisting of a father, mother and two sons and a daughter who each have a driving license and a vehicle of their own, data about drivers and vehicles can be shared among all family members using a single security entry point that may include a password. Alternatively each family member may want to keep certain information as private so that a different password is used for each family member. However, certain information may be flagged as shareable so everyone within the family can see those shared information. Such access and profile requirements and set up can be provided in an initialization step as referenced by step 300.

Beside the internal data that can be collected about the user/driver and/or vehicle, external data can also be collected simultaneously as indicated in step 320. As indicated earlier, this can include road conditions, weather condition, vehicle recall, or other similar information about the diver such as driver license suspension or other information as can be appreciated by those skilled in the art. In step 330, any user input received is also indicated, entered in the database or stored as provided in step 330.

Once all the information is received recommendation is then generated via the processor as indicated in step 340. Recommendation also includes alerts and reports as can be appreciated. Based on type of information, updates may become available. All recommendations will then be sent to a user or other computer as provided in the user request or as per profile set up. There also will be default function if neither is indicated as provided in step 340. In one embodiment, updates from external or internal sources as received automatically will be added and recommendation revised as indicated in step 350. In addition, the system, in one embodiment also conducts routine checks for updates and adds this to recommendation as appropriate. If any of the information is updated, recommendation is then sent recommendations when updated will then be sent out as well as indicated in step 360. Other determinations may also be made and recommendations sent out with this in step 360 which may be necessary but were not indicated as per the initial user request. Once all such information is received, any updated or necessary information will then be stored and user profiles as discussed will be updated as in step 370.

To help achieve greater understanding, a first example is uses where a driver or a user needs to make the following decisions. The driver/user would like to complete a trip from Los Altos to Chicago, at a given time - such as in the next week. Vehicle X is to be utilized for this trip. Based on the current conditions of Vehicle X, and either a suggested/default or a preselected preferred route and anticipated weather conditions during the time of travel, recommendations will be provided ahead of time for service and repairs that needs to be undertaken prior to trip commencement to avoid breakdowns and efficient use of Vehicle X. Weather conditions and other relevant important will be updated on a periodic basis as per a default or user preferences. For example, weather conditions prior to ten days ahead of the anticipated trip will not be updated, but upon the entering of a 10 day period prior to trip commencement, weather conditions will be updated on a daily basis. Once the trip commencement gets closer, such as within 48 hours, weather conditions may be updated every hour or couple of hours. This is to anticipate new conditions. For example, a car trip in October as anticipated in July across a particular path with moderate temperatures, will not anticipate extreme weather conditions such as possibility of snow and a first recommendation and any even an associated report is generated. However, an unanticipated weather pattern may bring sudden snow along the road. Four days prior to the trip the possibility of snow is good but the accumulation is not significant and thus a second recommendation is provided. However, just before 18 hours prior to the trip the accumulated snow on road surfaces is increased significantly, necessitating extreme measures such as securing snow chains on the tires for safe travels. A third r4commendation and even possibly a set of alerts will then be issued which will be different than the first and second recommendation and any associated reports.

In a second example, a user/driver wants to be reminded of repairs that needs to be done and other upcoming maintenance events that need to be scheduled. This assessment wait be done based on condition of the car and driving habits of those using the car. For example, changes to the breaking system may have to be made sooner for a driver that often drives on busy city streets that require use of the breaks more frequently. Similarly, a driver that uses a vehicle in an environment where corrosion from extreme weather conditions and other elements such as exposure to salt, used on icy roads to minimize road slippage, may be different than a driver that only drives in mild weather conditions such as straight roads in Southern California.

In on embodiment, driving habits of one or more drivers using a vehicle may be monitored such that a behavior change can be suggested to reduce the wear and tear of a particular vehicle. This may be beneficial when a new vehicle is purchased, especially, as the change in behavior patterns, especially in connection with an unfamiliar car may greatly increase the life of the vehicle.

In one embodiment, the monitoring and learning of individual driving habits, routes, distance, road conditions, and weather patterns can be performed by a mobile device such as a smart phone and in others this task can be accomplished either entirely using an on board diagnosis (OBD) device or a combination of an OBD device in conjunction with one or more computers (such as remote servers or mobile devices) can be provided in order to send information including data from one or more sensors provided, as part of the OBD or independently. Data can then be collected by including information from one or more sensors as well as from external sources including blogs, user guides, car value graphs and other sources as can be appreciated by those skilled in the art.

In one embodiment, based the drivers and vehicle can be classified based on one or more behavior or characteristics. In one embodiment, these classifications can then be managed according to similarities. The similarly classified entries are treated as cohorts and cohorts may be logged for maintenance and repair services in one database to collect better data to enable more timely prediction of events.

As more and more data is collected about the different drivers and the performance and particular characteristics of the vehicle(s) and its user/driver(s) as well as trip types and weather and road conditions most often frequented by such drivers, the better the intelligent system can anticipate and make more accurate predictions that can help the user. In this manner through data and learning, current and future drivers are can be sent alerts and recommendations for service and repair events.

In one embodiments the intelligent system 100 can provide an anticipatory report or generate alerts prior to a problem occurring based on the condition of the car, similar experiences of other users, or the driving habits and other things detected and observed. In one embodiment, a periodical report can be generated that provides the most likely problems anticipated for the car for a future time period such as over the next few months. While a precise guess as what may go wrong is difficult, a good estimate can be made of potential upcoming issues based studies of similar cars and car conditions, driving habits, and similar experience with similar cars driven by other users. In this way, an automatic expert system can be built that provides this type or other customized services for one or more users.

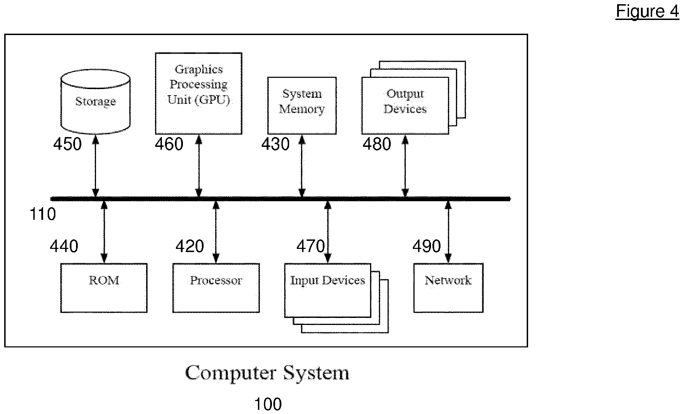

Figure 4 is a schematic block diagram illustration of a computer system 100 such as one that can be used in conjunction with different embodiments as will be discussed. The computer system 100 may be implemented using various appropriate devices. For instance, the computer system may be implemented using one or more personal computers ("PC"), servers, mobile devices (e.g., a Smartphone), tablet devices, and/or any other appropriate devices. The various devices may work alone (e.g., the computer system may be implemented as a single PC) or in conjunction (e.g., some components of the computer system may be provided by a mobile device while other components are provided by a tablet device). The computer system 100 may include one or more bus or bus systems such as depicted by 410, at least one processing element 120, a system memory 430, a read-only memory ("ROM") 440 , other components (e.g., a graphics processing unit) 460, input devices 470, output devices 480, permanent storage devices 430, and/or a network connection 490. The components of computer system may be electronic devices that automatically perform operations based on digital and/or analog input signals.

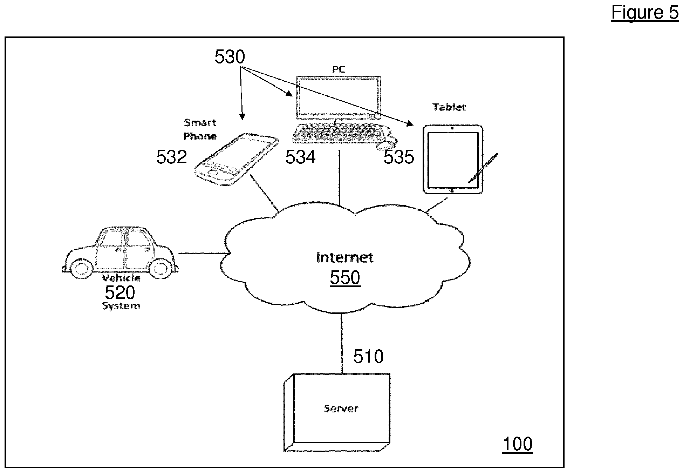

Figure 5 illustrates a block diagram of an embodiment of the intelligent a system 100 for delivering content to a user such as a vehicle occupant via an infotainment system of a vehicle 520. The system 100 may include a server 510 and one or more electronic devices 530 such mobile devices including smart phones (e.g., a companions device) 532, personal computers (PCs) 534 such as laptops and tablets (535). In one embodiment, a vehicle system 520 can also be used to collect information or even to deliver content. The vehicle system 520 itself can include the computer system 100 of Figure 1 entirely or be in processing communication to one or more of the units shown through the user of the network 550 which forms part of the system network 200. In addition, one or more displays, processing components and user interfaces can be provided as part of the infotainment system 520 (such as discussed in conjunction to input and output devices 470 and 480 of Figure 4). While the illustration of Figure 5 for ease of understanding provides shows a car as an example of a vehicle, it should be understood that a vehicle is used to include all similar vessels as can be understood by those skilled in the art. As other examples, the vehicle infotainment system can be disposed and be part of a plane, a boat or cruise ship or other such navigational vessels. Each electronic or mobile device 530 can also have its own displays, processors and other components as can be appreciated by those skilled in the art. In addition, the server 510 and other components may be directly connected, or connected via the network 550 which may include one or more private networks, the Internet or others.

## Claims

1. A method, comprising:
creating via a processor a profile (300) for at least one vehicle;
creating (300) a user profile for a driver of said one vehicle;
generating (340) data regarding condition of a plurality of components of said vehicle;
generating (340) at least one alert based on information from said user and vehicle profiles and said component conditions and providing said alert to the user via a user interface.

2. A system, comprising at least one processor configured to:
create a profile for at least one vehicle;
create a user profile for a driver of said one vehicle;
receive information from a plurality of sensors relating to conditions affecting driving of said vehicle;
an alert generator for generating (340) at least one alert based on information from said user and vehicle profiles and said component conditions;
a user interface for providing said alert to said user.

3. The method of claim 1 or apparatus of claim 2, wherein said processor is in a mobile device.

4. The method of claim 1 or apparatus of claim 2, wherein said processor is in a car infotainment system.

5. The method of claim any one of claims 1, 3 and 4 or the apparatus of any one of claims 2 to 4, wherein said alert is generated based on user input received for any anticipated trips to be taken during a time period and in an environment.

6. The method of claim 5 or apparatus of claim 5, wherein information about weather and road conditions during said time period is acquired through external databases.

7. The method of any one of claims 1, and 3 to 6 or the apparatus of any one of claims 2 to 6, wherein the vehicle profile comprises at least one of make and model of said vehicle.

8. The method of any one of claims 1 and 3 to 7 or the apparatus of any one of claims 2 to 7, wherein said vehicle profile about said vehicle comprises at least one of previous repair, accident or maintenance reports.

9. The method of any one of claims 1 and 3 to 8 or apparatus of claims 2 to 8, wherein said driver user profile comprises information representative of previous driving habits.

10. The method of claims 1 or 5 to 9 or apparatus of claims 2 or 5 to 9, wherein said at least one alert is sent to at least one user interface upon receiving a user request for information about said vehicle.

11. The method of claim 10 or apparatus of claim 10, wherein said alert is sent to said user interface only after a step of user authentication.

12. The method of claim 11 or apparatus of claim 11, wherein said user profile is in relation to a plurality of vehicles.

13. The method of claim 12 or apparatus of claim 12, wherein a user profile is created about said plurality of vehicles and a plurality of users after establishing security access authentication requirements for accessing information in a plurality of user and vehicle profiles.

14. The method of claim 13 or apparatus of claim 13 wherein e data is generated regarding condition of a plurality of components for each of said vehicles as well as maintenance and user alerts based on information obtained from user and vehicle profiles and relating to said component conditions.

15. A non-transitory computer readable medium comprising instructions for implementing the method of any one of claims 1 and 3 to 15 when executed by a processor.
